# EUROPEAN PATENT SPECIFICATION

(11) **EP 1 407 502 B1**
(45) Date of publication and mention of the grant of the patent: **02.03.2011**
(21) Application number: 02742548.7
(22) Date of filing: 13.07.2002
(51) Int. Cl.: H01M 8/02, H01M 8/24

(54) **SEAL FOR A FUEL CELL STACK**
DICHTUNG FÜR EINEN BRENNSTOFFZELLENSTAPEL
DISPOSITIF D'ETANCHEITE POUR EMPILAGE DE PILES A COMBUSTIBLE

(30) Priority: 13.07.2001 AU PR636601
(43) Date of publication of application: 14.04.2004
(73) Proprietor: Ceramic Fuel Cells Limited, Noble Park, VIC 3174 (AU)
(72) Inventor: THOMAS, Stephen, Roger, Maitland, Noble Park North, Victoria 3174 (AU); CHRISTIANSEN, Lars, Bang, Elsternwick, Victoria 3185 (AU); LE, Yeesan, Clayton, Victoria 3168 (AU); LAWRENCE, Jeremy Carl,, Cremorne, Victoria 3121 (AU)
(74) Representative: Brunner, Michael John
(86) International application number: PCT/AU2002/000940
(87) International publication number: WO 2003/007400

(56) References cited:
- EP-A2- 0 959 511
- WO-A-97/24778
- WO-A1-95/16287
- WO-A1-97/24778
- WO-A1-99/04446
- US-A- 4 910 100
- US-A- 5 503 945
- US-A- 6 040 076

## Description

### FIELD OF THE INVENTION

The present invention relates to a seal assembly for separating gases in a fuel cell stack. It is particularly applicable to providing gas-tight seals between the faces of components in a stack of planar solid-oxide fuel cells.

### BACKGROUND OF THE INVENTION

Solid oxide fuel cell stacks operate at elevated temperature using both fuel gases and oxidising gases. A single stack is formed by stacking a plurality of fuel cell components together with interconnecting manifolds to allow respective fuel and oxidizing gases to flow between components of each cell. The cell components include alternately arranged fuel cell plates and gas separator plates, with seals provided therebetween to separate the gases flowing through the stack. Additional structures are also required to guide the flow of the gases over the fuel cells and to regulate the spacing between adjacent plates of each cell.

Difficulties have been encountered in producing a reliable and robust seal between facing surfaces of the cell plates and the gas separator plates because of the difficult environment in which the seal needs to operate.

Solid oxide fuel cell stacks operate at typically 700 to 1100°C, preferably 700 to 850 or 900°C and it has been proposed to form the seals from molten or semi molten glass positioned at contact points between facing surfaces of the fuel cell and gas separator plates. An axial compressive force needs to be applied to the stack in order to hold the plates together but such a compressive force also has the effect of tending to squeeze any sealing material from between the mating surfaces. This is exacerbated in the case of a vertically standing stack where the plates at the bottom of the stack may have, in addition to the axial compressive force induced throughout the stack, the additional weight of the plates above them also tending to squeeze the sealing material from between the mating faces.

It has been proposed to produce such a seal by mixing a glass powder with a binder before positioning the resultant sealing material between the facing surfaces, where sealing is required. The sealing material may be applied to the appropriate surface(s) by way of a screen printing process. In order to complete formation of the seal, the material needs to be exposed to oxygen during warm up of the stack, in order to burn out the binder and develop the final seal. In many situations it is difficult to deliver an adequate oxygen supply to all areas of the seal in order to provide a satisfactory bum out process within a reasonable time. An incomplete bum out process may result in a porous and possibly non-functional seal. The bum out also produces emissions which are costly to collect and treat in a commercial mass production operation.

In order to reduce the likelihood of such a seal being squeezed out from between the mating surfaces of the fuel cell plates, it has been proposed to incorporate higher melting point sand particles into the glass sealing material in order to provide a spacer between the mating surfaces, but extended durability tests on fuel cell stacks indicate that this means of spacing is unreliable for long term operation. The sand also compromises the density of the glass seal.

An aim of the present invention is to provide a seal which addresses these difficulties.

The invention is particularly concerned with a fuel cell stack comprising alternating solid oxide fuel cell plates and gas separator plates stacked face to face with one or more seal assemblies provided between opposed generally planar surfaces of each adjacent pair of said fuel cell and gas separator plates, each of said seal assemblies comprising a pair of rigid ribs projecting from one of said surfaces with a valley defined therebetween, a third rigid rib projecting from the other of said surfaces and nested between said pair of ribs, and a glass sealant along the valley that contacts the surface of the valley and the third rib.

Such a fuel cell stack is disclosed in US 4,910,100. However, in that arrangement the individual components are adapted to be freely slidable with respect to one another.

### SUMMARY OF THE INVENTION

According to the invention, a fuel cell stack of the type described is **characterised in that** each rib has side walls and tapers away from the respective plate, said side walls forming opposed contact surfaces that cooperate to define the maximum insertion of the third rib into the valley with said third rib having a profile that leaves a void for the glass sealant between the valley and the third rib at said maximum insertion.

With the defined seal assembly, a load bearing interlocking arrangement of ribs is provided that physically supports the fuel cell and gas separator plates whilst ensuring that the glass sealant is not load bearing. Additionally, the ribs are designed such that they cause the seal assemblies to be self-aligning upon interlocking of the fuel cell and gas separator plates. To facilitate this, each rib tapers away from the respective plate towards a distal surface of the rib. In this arrangement, inclined side walls of the ribs may form the opposed contact surfaces, whereby the void is formed between the distal surface of the third rib and the surface of the valley.

In this arrangement, the distal surface of at least one of the pair of ribs may also contact the opposed plate at the maximum insertion of the third rib into the valley in order to spread the load bearing.

Preferably, the fuel cell stack is a columnar stack and said one of said surfaces is upwardly facing so that the valley between the pair of ribs is upwardly open but for the third rib and the glass sealant can be readily disposed in the valley during assembly of the stack. Conveniently, the glass sealant is introduced to the valley as a powder that is heated to melt the glass after assembly.

The glass sealant is advantageously fully molten but viscous at a temperature in the operating temperature range of the stack of about 700 to about 1100°C, and most preferably the glass sealant is fully molten but viscous at any temperature in the preferred operating range of 700 to 900°C. One possible composition range for the glass sealant is 0-2 wt% Li₂O, 0-18 wt% Na₂O, 2-25 wt% K₂O, 0-4 wt% MgO, 0-15 wt% CaO, 0-10 wt% SrO, 0-30 wt% BaO, 0-25 wt% B₂O₃, 0-10 wt% Al₂O₃, 30-75 wt% SiO₂ and 0-10 wt% ZrO₂. More preferably, the glass sealant has a composition range of 0-0.7 wt% Li₂O, 0-1.2 wt% Na₂O, 5-15 wt% K₂O, 0-2 wt% MgO, 2-12 wt% CaO, 0-2 wt% SrO, 2-10 wt% BaO, 2-10 wt% B₂O₃, 2-7 wt% Al₂O₃, 50-70 wt% SiO₂ and 0-2 wt% ZrO₂.

The ribs should have a sufficient height to provide the desired spacing for the respective gas flow between the adjacent plates. For example, the ribs may have a height in the range of 250 to 1000 µm.

The portions of the fuel cell and gas separator plates incorporating the seal assemblies may be formed of metallic or ceramic material. In the case of metallic material, the ribs and valley of each seal assembly could be etched on respective sides of the plates. Alternatively, in either case, the ribs could be formed by depositing on the plate an appropriate rib material or precursor material that would adhere to the plate. Thus, in the case of ceramic plates, the ribs may be formed by screen printing a slurry of the rib material in a binder onto the respective surfaces, and drying and firing the resultant structure. The ribs are conveniently formed of the same ceramic material as the respective plates, for example zirconia. In the case of the gas separator plates, the zirconia may contain up to 20 wt% alumina. Preferably the ribs on the fuel cell plates are formed on the electrolyte and the electrolyte is yttria-stabilised zirconia.

The fuel cell stack may be internally and/or externally manifolded for the incoming and exhaust gases, and the shape and location of the seal assemblies must be adjusted accordingly.

In the described embodiment the fuel cell stack is internally manifolded for the incoming fuel gas and exhaust fuel gas, and each aperture through the fuel cell and gas separator plates for said incoming fuel gas and exhaust fuel gas is surrounded by a respective one of the seal assemblies on a cathode-side of each pair of adjacent fuel cell and gas separator plates. Advantageously, there are two exhaust fuel gas manifolds, and the seal assemblies around the apertures therefor each have an arm extending away from the respective aperture towards but spaced from the incoming fuel gas manifold and alongside the cathode to guide oxygen-containing gas over the cathode.

Also in the described embodiment the fuel cell stack is externally manifolded for incoming and exhaust oxygen-containing gas, and a single one of said seal assemblies extends in a closed loop on an anode side of each pair of adjacent fuel cell and gas separator plates outwardly of said apertures through the plates. The closed loop is conveniently shaped to direct the incoming fuel gas over the anode. In a preferred embodiment, the incoming and exhaust oxygen-containing gas manifolds are defined by the periphery of the plates, the seal assemblies and a housing in which the stack is disposed. The manifolds between the periphery of the plates and the housing may be separated from each other by seals.

### BRIEF DESCRIPTION OF THE DRAWINGS

One embodiment of a fuel cell stack in accordance with the invention will now be described, by way of example only, with reference to the accompanying drawings, in which:
Figure 1 is a plan view of the fuel cell stack;
Figure 2 is an exploded schematic perspective view looking downwards and illustrating the general orientation of cell plates and gas separator plates within the stack shown in Figure 1;
Figure 3 is a schematic perspective view looking upwards at the cell plates and gas separator plates in the same exploded positions shown in Figure 2;
Figure 4 is a perspective view of the top side of one of the cell plates as shown in Figure 2;
Figure 5 is a cut-away perspective view of the top side of one of the gas separator plates shown in Figure 2;
Figure 6 is a cut-away underside view of the separator plate shown in Figure 5; and
Figure 7 is a diagrammatic cross-sectional view through a portion of a gas seal assembly between the plates shown in Figures 1 and 2.

### DETAILED DESCRIPTION OF EMBODIMENT OF THE INVENTION

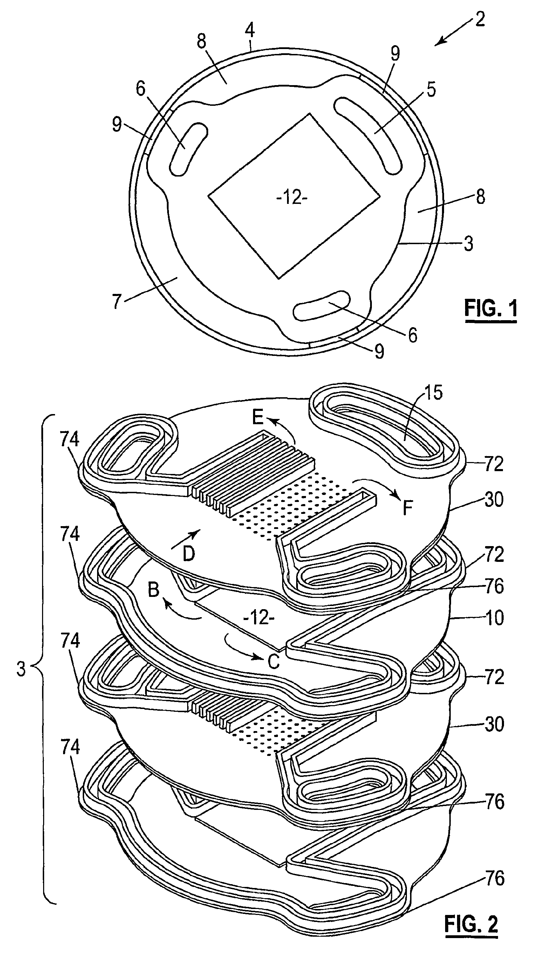

Referring to Figures 1, 2 and 3 a solid oxide fuel cell stack assembly 2 comprises a stack 3 of alternating fuel cell components, in the form of cell plates 10 and gas separator plates 30 held within a tubular housing 4. All of the cell plates 10 are identical and all of the separator plates 30 are identical. Typically there might be 20 to 500 of each of these plates in the stack 3. Fuel gas and air are supplied at one axial end of the stack assembly and exhaust gases are collected at the other end in a co-current manifolding system. Either end is suitable for the supply and exhaust functions, but the manifold system may alternatively be counter-current. In the described co-current embodiment, the fuel and air supplies are both at the bottom and the exhausts are at the top, but in many circumstances it is preferred for the fuel to be supplied from the bottom and the air to be supplied from the top in a counter-current arrangement. Alternatively, all of the gas supplies and exhausts may be at the same end.

Referring to Figures 1 to 6, each cell plate 10 has a substantially central, square anode layer on an upper face of the electrolyte-based cell plate and a substantially central, square cathode layer on a lower face of the cell plate to form a substantially square fuel cell 12.

The cell plates 10 and separator plates 30 have the same outer shape, which could be described as generally trilobular, or part way between a circle and a triangle. The shape could alternatively be described as generally circular with three rounded lobes extending therefrom. Two of the lobes 74 and 76 are the same size and the third lobe 72 extends about 50% further than the others circumferentially around the periphery of the plate. At each lobe 72, 74 and 76 a kidney shaped aperture (numbered 14, 16 and 18 in the cell plate and 15, 17 and 19 in the separator plate respectively) extends through the plate. The larger lobes 72 carry the larger apertures 14 and 15. A system of rib or ridge-shaped seals on the faces of the plates directs the gas flows within the stack. These seals are described hereinafter in more detail.

Fuel distribution and exhaust collection manifolds 5 and 6, respectively, (Figure 1) defined by the three aligned series of apertures 14 and 15, 16 and 17, and 18 and 19 in the fuel cell and gas separator plates and formed by interlocking the seal components of the plates 10 and 30, conduct the fuel inlet and exhaust streams past the air side of the plates to the anode side. Air supply and collection manifolds 7 and 8 respectively are created by three volumes formed between the periphery of the stack 3 and the inside wall of the housing 4. Manifold 7 is formed essentially between the lobes 74 and 76 of the plates, and the two exhaust manifolds 8 are formed essentially between the lobes 72 and 74 and the lobes 72 and 76, respectively, of the plates. Air inlet manifold 7 has an angular extent that is about 50% larger than the each of the two exhaust manifolds 8, and is opposite the fuel inlet or distribution manifold 5. Respective elongate, sliding fibrous seals 9 extend along the stack adjacent the lobes 72, 74 and 76, between the stack 3 and the inside wall of the housing 4 to separate the air supply manifold 7 from the two air collection manifolds 8. The fibrous seals may permit a degree of leakage between the manifolds 7 and 8, but this is not likely to be detrimental to the operation of the stack.

The housing 4 is constructed of a suitable heat resistant steel sheet material, which may be lined with a suitable insulating material, and is slid into position over the stack 3 after the plates 10 and 30 have been assembled together.

In operation of the stack, fuel gas flows up through the larger aperture 14 defining an inlet port in each cell plate 10 and (at arrow A) across the face of the fuel cell anode, then divides its flow (arrows B and C) to exit up through exhaust port apertures 17 and 19, respectively, in the adjacent gas separator plate 30. On the opposite face of the cell plate 10 air, which has passed up the side of the stack 3 through the inlet manifold 7 between the stack and the housing, flows in (arrow D) from the periphery of the stack 3 and across the face of the fuel cell cathode, in counter-current to the fuel gas flow across the fuel cell anode, before dividing its flow to exit (arrows E and F) from the periphery of the stack 3 and then continuing up through the exhaust manifolds 8 to the top of the stack.

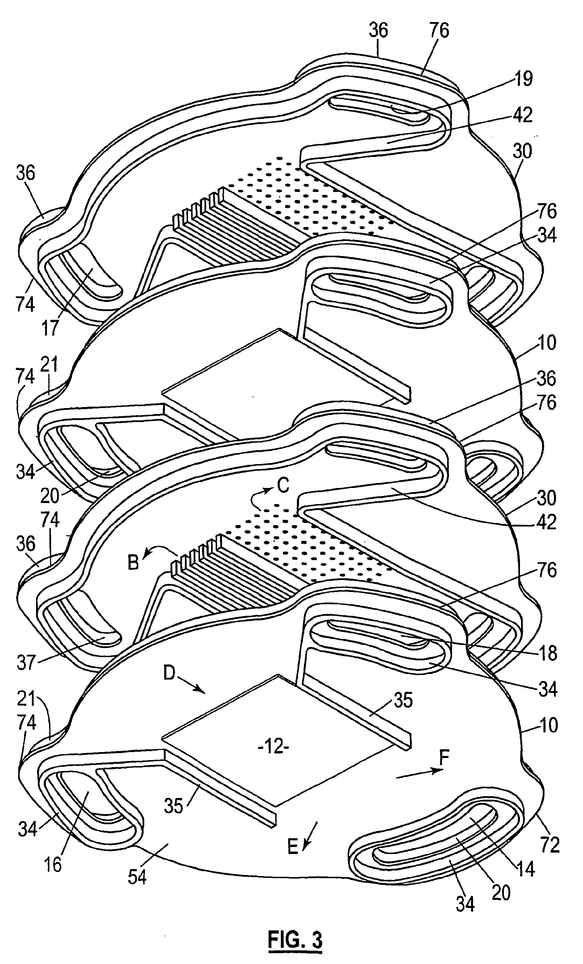

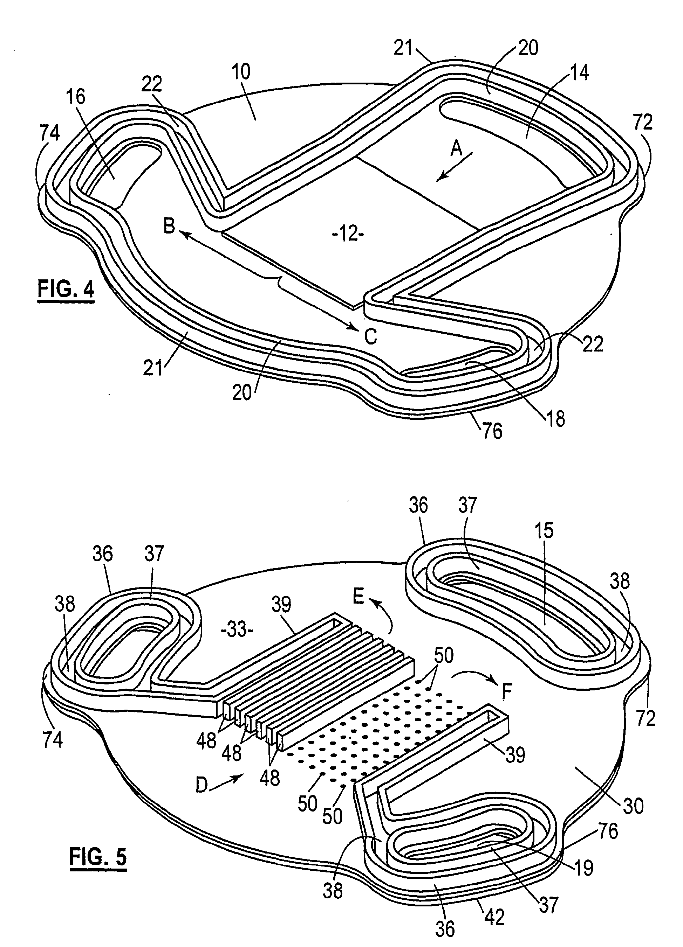

Referring to Figure 4, the generally planar cell plate 10 used in the stack 3 is shown in greater detail. The square fuel cell 12 on the plate (the anode is visible) has an electrolyte supported structure with the electrolyte material extending out to form the main body of the plate 10. The electrolyte is preferably a yttria stabilised zirconia and suitable 3Y, 8Y and 10Y materials are known to those in the art. The anode is preferably a nickel-zirconia cermet and the cathode is preferably a conductive Perovskite such as lanthanum strontium manganate. The underside of the cell plate 10 and the cathode are visible in Figure 3.

A pair of parallel ribs 20 and 21 project from the planar surface 24 of the cell plate 10 forming a valley or groove 22 therebetween. The surface 24 is the upper, anode surface of the cell plate when the stack is oriented for use. The ribs are formed of zirconia and may be integrally formed with the main body of the plate or may be formed separately, for example from a screen printed slurry, and be fired into integral relationship with the main body. Each rib 20 and 21 forms a continuous path or closed loop outwardly of the apertures 14, 16 and 18 through the cell plate and around the perimeter of the region which the fuel gas is permitted to contact. In particular, the closed loop defined by the ribs 20 and 21 is waisted alongside the anode to direct fuel gas from the inlet aperture 14 over the anode.

In all the Figures, the thickness of the plates 10 and 30 and the height of the ribs are shown greatly exaggerated to assist the explanation of the components. In this embodiment, the fuel cell 12 is 2500mm², the cell plate is 150µm thick and the ribs are approximately 500µm high, 1mm wide and approximately 2mm apart.

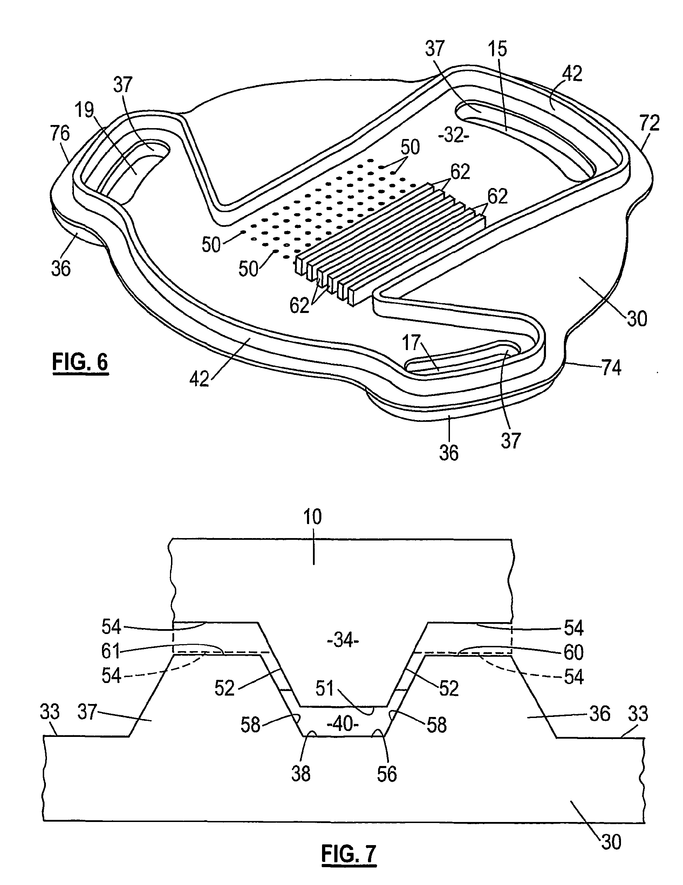

On the lower, cathode-side 54 of each fuel cell plate 10, as shown in Figure 3, a respective single rib 34 (that corresponds to the ribs 20 and 21 in term of size and how it is formed) extends around each of the apertures 14, 16 and 18 through the plate. Each of the ribs 34 around the apertures 16 and 18 has an arm 35 that extends inwardly and towards the aperture 14 (but short thereof) alongside the cathode layer of the fuel cell 12 to assist guidance of incoming air over the cathode. One of the ribs 34 is also shown in Figure 7 and the use of the rib seals is described with reference to that Figure.

Figures 5 and 6 show the planar gas separator plate 30 in greater detail. In Figure 5, the surface 33 is the upper, cathode-contacting surface of the separator plate 30 when the stack is oriented for use. Respective pairs of parallel ribs 36 and 37 project from the planar surface 33 of the separator plate 30 forming valleys or grooves 38 therebetween. The pairs of parallel ribs 36 and 37 correspond to the ribs 20 and 21 in terms of size, spacing and how they are formed, but extend around the apertures 15, 17 and 19 through the plate 30 to cooperate with the ribs 34 on the cathode-side of the adjacent fuel cell plate 10. The respective ribs 36 associated with the apertures 17 and 19 each have a double-walled arm 39 that is closed at its distal end to cooperate with and receive the arm 35 of the corresponding rib 34.

On the lower, anode-contacting side 32 of each gas separator plate 30, a single rib 42 is shown in Figure 6 and partly in Figure 5. The rib 42 corresponds to the ribs 20 and 21 in terms of size and how it is formed, and forms a continuous path outwardly of the apertures 15, 17 and 19 through the plate 30 and around the perimeter of the region that the fuel gas is permitted to contact. The outline of the rib 42 corresponds to the groove 22 between the ribs 20 and 21 on the anode surface of the adjacent fuel cell plate 10 and cooperates with those ribs in forming a seal.

As explained hereinafter, with reference to Figure 7, glass sealant 40 is used in both of valleys 22 and 38 to form a seal between the ribs.

Each separator plate 30 is conveniently manufactured from a zirconia to substantially match the coefficient of thermal expansion of the main body of the cell plates 10. This greatly minimises thermal stresses in the assembly during start-up, operation and shutdown. The zirconia may be yttria-stabilised, but could be, for example, an alumina-added zirconia with up to 20 wt% alumina.

The zirconia is not electrically conductive, and the separator plate 30 has an array of perforations 50 extending perpendicularly through its full thickness that are filled with an electrically conductive plug material. These perforations may be formed by laser cutting and occupy a region in the plate 30 which is directly opposite the region occupied by the fuel cell 12 in plate 10. The plug material may be metallic silver (commercially pure) which is plated into the perforations by standard plating or printing techniques. Alternatively the perforations may be filled with a silver alloy or a silver composite, such as a composite of silver or silver alloy in glass. Suitable alloying elements include gold, palladium and platinum. Alternatively, the silver may be mixed with stainless steel, for example as powder prior to sintering in the perforations.

The perforations have an average cross-sectional dimension of about 300 µm, and the plug material seals the perforations to present a total cross-sectional area of plug material in the range of 0.2 to 5mm² per 1000mm² of surface area opposed to the respective electrode, measured on one side only of the plate 30. The electrically conductive silver based plug which fills each perforation is preferably plated with a protective Ni coating on the anode side and an Ag-Sn coating on the cathode side. The coatings advantageously extend over the entire electrode contacting areas of the plate. The nickel coating may have an undercoating of Ag to assist the Ni to bond to the separator body and to enhance the compliance of the coating, and the Ag-Sn coating may have a SnO₂ surface layer. Such coatings, for example by screen printing of powder materials in a binder and subsequent firing, may act to fill the perforations 50 from the outside so as to ensure that electrically conductive paths are provided via the perforations from one of the outer surfaces to the other outer surface of the gas separator plate. By way of example only, the nickel coating, the Ag coating (if present) and the Ag-Sn coating may have thicknesses in the range of 60-100 µm, 20-200 µm and 100-150 µm, respectively.

An array of parallel ridges 48 is positioned parallel to the air flow stream in the cathode contacting area on the side 33 of each plate 30. These ridges 48 are each aligned over a corresponding row of perforations 50 and over any Ag-Sn coating. To assist explanation, about half of the ridges 48 have been removed in Figures 2 and 5. The ridges 48 perform two major functions. First they provide a conductive path between the plug material in perforations 50 or Ag-Sn coating and the fuel cell 12. Second they provide physical support to brace the thin and fragile cell plate as well as means for distributing gas flows in the narrow spaces between the cell plates and the separator plates. The ridges 48 thus need to be both electrically conductive and structurally stable. The ridges 48 are approximately 500 µm high and could be made from a conductive perovskite, such as the LSM material of the cathode, optionally with a metallic silver coating about 50µm thick over the ridges.

On the underside of plate 30 (ie. surface 32 shown in Figure 6), the rows of plugged perforations 50 and any Ni coating and/or Ag undercoating are covered by an array of parallel ridges 62 that are positioned parallel to the fuel gas flow stream. Again, about half the ridges 62 are cut away in Figure 6 to assist visualisation of the structure. The ridges 62 perform as a current collector whereby current is conducted between the plug material in the perforations 50 or any coating and the anode. They also provide physical support for the cell plate and additionally provide means for directing and distributing gas flows in the narrow spaces between the cell plates and separator plates. The ridges are approximately 500µm high and could be formed from the same material as the anode, optionally with an overlay (approx 50µm thick) of nickel.

Referring to Figure 7, a pool of glass sealant 40 is located between the ribs 36 and 37 and is pressed into by rib 34. Each rib has a tapered profile with oppositely inclined flanks and a distal surface. A similar arrangement applies between the ribs 20 and 21 and rib 42, but will not be described separately. During manufacture, the glass is introduced as a powder and the stack assembled before the stack is heated to melt the glass in order to form the required seal. Thus, no binder is required. In operation of the stack the glass sealant 40 is fully molten but highly viscous and is retained in the groove 38 by one of the following three options not all shown in Figure 7. The glass advantageously has a composition range of 0-0.7 wt% Li₂O, 0-1.2 wt% Na₂O, 5-15 wt% K₂O, 0-2 wt% MgO, 2-12 wt% CaO, 0-2 wt% SrO, 2-10 wt% BaO, 2-10 wt% B₂O₃, 2-7 wt% Al₂O₃, 50-70 wt% SiO₂ and 0-2 wt% ZrO₂.

In this embodiment, when the third rib 34 is inserted to its maximum extent into the groove 38, each flank 52 of the third rib 34 would engage corresponding a flank 58 of a respective one of the pair of ribs 36 and 37 defining the groove 38, leaving distal surfaces 60 and 61 of the ribs 36 and 37, respectively, clear of basal surfaces 54 of the plate 10 and distal surface 51 of the rib 34 clear of floor 56 of the groove 38. In this case the sealant 40 would fill the volume between the distal surface 51 and the floor 56. At the maximum insertion of the third rib 34 the basal surfaces 54 of the plate 10 may contact the distal surfaces 60 and 61 of the ribs 36 and 37, respectively, at the same time as the flanks 52 and 58 engage as described.

The described embodiment provides a stack configuration which is simple to construct and has substantial flexibility in control of the gas flows to, from and over the fuel cell electrodes. It uses a relatively small number of components and the sliding interfaces provided by the fibrous seals produce much lower stresses during thermal cycling.

While the preferred embodiment has separator plates made from zirconia, the separator plates may be made from a lanthanum chromite to facilitate electrical conductivity therethrough, or from a self-aluminising stainless steel.

Other aspects of the fuel cell stack described herein are disclosed and claimed in copending International patent applications WO 2003/007413 and WO 2003/007403 filed concurrently herewith and respectively entitled Solid Oxide Fuel Cell Stack Configuration and A Fuel Cell Gas Separator Plate and claiming priority from Australian provisional patent applications PR6344 and PR6365 filed 13 July 2001.

## Claims

1. A fuel cell stack comprising alternating solid oxide fuel cell plates (10) and gas separator plates (30) stacked face to face with one or more seal assemblies (20, 21, 34, 36, 37, 38, 40, 42) provided between opposed generally planar surfaces (33, 54) of each adjacent pair of said fuel cell and gas separator plates, each of said seal assemblies comprising a pair of rigid ribs (20, 21, 36, 37) projecting from one of said surfaces (33) with a valley (22, 38) defined therebetween, a third rigid rib (34, 42) projecting from the other of said surfaces and nested between said pair of ribs, and a glass sealant (40) along the valley that contacts the surface of the valley (22, 38) and the third rib (34, 42), **characterised in that** each rib (20, 21, 34, 36, 37, 38, 40, 42) has side walls (52, 58) and tapers away from the respective plate, said side walls forming opposed contact surfaces that cooperate to define the maximum insertion of the third rib (34, 42) into the valley (22, 38) with said third rib (34, 42) having a profile that leaves a void for the glass sealant between the valley (22, 38) and the third rib (34, 42) at said maximum insertion.

2. A fuel cell stack according to claim 1, **characterised in that** each rib (20, 21, 34, 36, 37, 42) has two inclined side walls (52, 58).

3. A fuel cell stack according to claim 1 or claim 2, **characterised in that** at least one of the pair of ribs (20, 21, 36, 37) has a distal surface (51, 61) that also contacts the opposed plate at said maximum insertion.

4. A fuel cell stack according to any one of claims 1 to 3, **characterised in that** it is a columnar stack (3) and said one of said surfaces (33, 54) is upwardly facing.

5. A fuel cell stack according to any one of claims 1 to 4, **characterised in that** the glass sealant (40) has a composition range of 0-2 wt% Li₂O, 0-18 wt% Na₂O, 2-25 wt% K₂O, 0-4 wt% MgO, 0-15 wt% CaO, 0-10 wt% SrO, 0-30 wt% BaO, 0-25 wt% B₂O₃, 0-10 wt% Al₂O₃, 30-75 wt% SiO₂ and 0-10 wt% ZrO₂.

6. A fuel cell stack according to claim 5, **characterised in that** the glass sealant (40) has a composition range of 0-0.7 wt% Li₂O, 0-1.2 wt% Na₂O, 5-15 wt% K₂O, 0-2 wt% MgO, 2-12 wt% CaO, 0-2 wt% SrO, 2-10 wt% BaO, 2-10 wt% B₂O₃, 2-7 wt% Al₂O₃, 50-70 wt% SiO₂ and 0-2 wt% ZrO₂.

7. A fuel cell stack according to any one of claims 1 to 6, **characterised in that** the glass sealant (40) is fully molten but viscous at a temperature in the operating temperature range of the stack of about 700 to about 1100°C.

8. A fuel cell stack according to claim 7, **characterised in that** the glass sealant (40) is fully molten but viscous at any temperature in the range 700 to 900°C.

9. A fuel cell stack according to any one of claims 1 to 8, **characterised in that** all of the plates (10, 30) are ceramic and the ribs (20, 21, 34, 36, 37, 42) are formed by screen printing a slurry of the rib material in a binder onto the respective surfaces, and drying and firing the resultant structure.

10. A fuel cell stack according to any one of claims 1 to 9, **characterised in that** all of the plates (10, 30) are ceramic and the ribs (20, 21, 34, 36, 37, 42) are formed respectively of the same material.

11. A fuel cell stack according to claim 10, **characterised in that** the gas separator plates (30) are formed of zirconia containing up to 20 wt% alumina.

12. A fuel cell stack according to claim 10 or claim 11, **characterised in that** the ribs (20, 21, 34) on the fuel cell plates (10) are formed on the electrolyte and the electrolyte is yttria-stabilised zirconia.

13. A fuel cell stack according to any one of claims 1 to 12, **characterised in that** the fuel cell stack (3) is internally manifolded (5, 6) for the incoming fuel gas and exhaust fuel gas and each aperture (14, 15, 16, 17, 18, 19) through the fuel cell and gas separator plates (10, 30) for said incoming fuel gas and exhaust fuel gas is surrounded by a respective one of the seal assemblies (34, 36, 37, 38, 40) on a cathode-side of each pair of adjacent fuel cell and gas separator plates.

14. A fuel cell stack according to claim 13, **characterised in that** there are two exhaust fuel gas manifolds (6) and the seal assemblies (34, 36, 37 38, 40) around the apertures (16, 17, 18, 19) therefor each have an arm (35, 39) extending away from the respective aperture towards but spaced from the incoming fuel gas manifold (5) and alongside the cathode to guide oxygen-containing gas over the cathode.

15. A fuel cell stack according to claim 13 or claim 14, **characterised in that** the fuel cell stack (3) is externally manifolded (7, 8) for incoming and exhaust oxygen-containing gas and a single one of said seal assemblies (42) extends in a closed loop on an anode side of each pair of adjacent fuel cell and gas separator plates (10, 30) outwardly of said apertures (14, 15, 16, 17, 18, 19) through the plates.

16. A fuel cell stack according to claim 15, **characterised in that** the closed loop is shaped to direct the incoming fuel gas over the anode.

17. A fuel cell stack according to claim 15 or claim 16, **characterised in that** the incoming and exhaust oxygen-containing gas manifolds (7, 8) are defined by the periphery of the plates (10, 30), the seal assemblies (20, 21, 42) and a housing (4) in which the stack (3) is disposed.

## Patentansprüche

1. Brennstoffzellenstapel, abwechselnd Festoxid-Brennstoffzellenplatten (10) und Gasabscheiderplatten (30) umfassend die, einander gegenüberliegend mit einer oder mehreren Dichtungseinheiten (20,21,34,36,37,38,40,42) gestapelt sind, welche zwischen gegenüberliegenden, im allgemeinen planaren Flächen (33,45) jedes benachbarten Paares von Brennstoffzellen- und Gasabscheiderplatten bereitgestellt sind, wobei jede der Dichtungseinheiten ein Paar von starren Rippen (20,21,36,37) umfasst, die von einer der Flächen (33) mit einem dazwischen definierten Tal (22,38) vorspringt, eine dritte starre Rippe (34,42), die von der anderen der Flächen vorspringt und zwischen dem Paar von Rippen eingebettet ist, und ein Glasdichtungsmittel (40) entlang dem Tal, das die Oberfläche des Tals (22,38) und die dritte Rippe (34,42) berührt, **dadurch gekennzeichnet, dass** jede Rippe (20,21, 34,36,37,38,40,42) Seitenwände (52,58) hat und sich von der entsprechenden Platte weg verjüngt, wobei die Seitenwände einander gegenüberliegende Kontaktflächen bilden, die zusammenwirken, um die maximale Einführung der dritten Rippe (34,42) in das Tal (22,38) zu definieren, wobei die dritte Rippe (34,42) ein Profil hat, das eine Lücke für das Glasdichtungsmittel zwischen dem Tal (22, 38) und der dritten Rippe (34,42) bei der maximalen Einführung lässt.

2. Brennstoffzellenstapel nach Anspruch 1, **dadurch gekennzeichnet, dass** jede Rippe (20,21,34,36,37,42) zwei geneigte Seitenwände (52,58) hat.

3. Brennstoffzellenstapel nach Anspruch 1 oder Anspruch 2, **dadurch gekennzeichnet, dass** mindestens eine von dem Paar von Rippen (20,21,36,37) eine distale Fläche (51,61) hat, die bei der maximalen Einführung in Kontakt auch mit der gegenüberliegenden Platte ist.

4. Brennstoffzellenstapel nach einem der Ansprüche 1 bis 3, **dadurch gekennzeichnet, dass** er ein säulenförmiger Stapel (3) ist und dass eine der Flächen (33,54) nach oben weist.

5. Brennstoffzellenstapel nach einem der Ansprüche 1 bis 4, **dadurch gekennzeichnet, dass** das Glasdichtungsmittel (40) eine Zusammensetzung im Bereich von 0-2 Gewichtes-% Li₂O, 0-18 Gewichts-% Na₂O, 2-25 Gewichts-% K₂0, 0-4 Gewichts-% MgO, 0-15 Gewichts-% CaO, 0-10 Gewichts-% SrO, 0-30 Gewichts-% BaO, 0-25 Gewichts-% B₂O₃, 0-10 Gewichts-% Al₂O₃, 30-75 Gewichts-% SiO₂ und 0-10 Gewichts-% ZrO₂ hat.

6. Brennstoffzellenstapel nach Anspruch 5, **dadurch gekennzeichnet, dass** das Glasdichtungsmittel (40) eine Zusammensetzung im Bereich von 0-0,7 Gewichts-% Li₂O, 0-1,2 Gewichts-% Na₂O, 5-15 Gewichts-% K₂O, 0-2 Gewichts-% MgO, 2-12 Gewichts-% CaO, 0-2 Gewichts-% SrO, 2-10 Gewichts-% BaO, 2-10 Gewichts-% B₂O₃, 2-7 Gewichts-% Al₂O₃, 50-70 Gewichts-% SiO₂ und 0-2 Gewichts-% ZrO₂ hat.

7. Brennstoffzellenstapel nach einem der Ansprüche 1 bis 6, **dadurch gekennzeichnet, dass** das Glasdichtungsmittel (40) bei einer Temperatur im Bereich der Betriebstemperatur des Stapels von etwa 700 bis etwa 1100°C vollständig geschmolzen aber zähflüssig ist.

8. Brennstoffzellenstapel nach Anspruch 7, **dadurch gekennzeichnet, dass** das Glasdichtungsmittel (40) bei jeder Temperatur im Bereich zwischen 700 und bis etwa 900°C vollständig geschmolzen aber zähflüssig ist.

9. Brennstoffzellenstapel nach einem der Ansprüche 1 bis 8, **dadurch gekennzeichnet, dass** alle Platten (10,30) keramisch sind und die Rippen (20,21,34,36,37,42) durch Siebdruck mit einer Aufschlämmung des Rippenmaterials in einem Bindemittel auf die entsprechenden Flächen sowie Trocknen und Brennen der sich ergebenden Struktur gebildet sind.

10. Brennstoffzellenstapel nach einem der Ansprüche 1 bis 9, **dadurch gekennzeichnet, dass** alle Platten (10,30) keramisch sind und die Rippen (20,21,34,36,37,42) jeweils aus demselben Material gebildet sind.

11. Brennstoffzellenstapel nach Anspruch 10, **dadurch gekennzeichnet, dass** die Gasabscheiderplatten (30) aus Zirkonoxid gebildet sind, das bis zu 20 Gewichts-% Aluminiumoxid enthält.

12. Brennstoffzellenstapel nach Anspruch 10 oder Anspruch 11, **dadurch gekennzeichnet, dass** die Rippen (20,21,34) auf den Brennstoffzellenplatten (10) auf dem Elektrolyten gebildet sind und der Elektrolyt yttriumstabilisiertes Zirkonoxid ist.

13. Brennstoffzellenstapel nach einem der Ansprüche 1 bis 12, **dadurch gekennzeichnet, dass** der Brennstoffzellenstapel (3) für das ankommende Brenngas und das abgeführte Brenngas intern zusammengeschaltet (5,6) ist, und jede Öffnung (14,15,16,17,18,19) durch die Brennstoffzellen- und Gasabscheiderplatten (10,30) für das ankommende Brenngas und das abgeführte Brenngas von einer jeweiligen der Dichtungseinheiten (34,36,37,38,40) an einer Katodenseite jedes Paars von benachbarten Brennstoffzellen- und Gasabscheiderplatten umgeben ist.

14. Brennstoffzellenstapel nach Anspruch 13, **dadurch gekennzeichnet, dass** es zwei Verteilrohre (6) für das verbrauchte Brenngas gibt, und die Dichtungseinheiten (34, 36,37,38,40) um die Öffnungen (16,17,18,19) daher jeweils einen Arm (35,39) haben, der sich von der jeweiligen Öffnung weg entlang der Katode der zu dem Verteilrohr (5) für ankommendes Brenngas und entlang erstreckt, wobei der Arm (35,39) von dem Verteilrohr (5) beabstandet ist, um das sauerstoffhaltige Gas über die Katode zu führen.

15. Brennstoffzellenstapel nach Anspruch 13 oder Anspruch 14, **dadurch gekennzeichnet, dass** der Brennstoffzellenstapel (3) für ankommendes und abgeführtes sauerstoffhaltiges Gas extern zusammengeschaltet (7,8) ist, und eine einzelne der Dichtungseinheiten (42) sich in einer geschlossenen Schleife auf einer Anodenseite von jedem Paar von benachbarten Brennstoffzellen- und Gasabscheiderplatten (10,30) außerhalb von den Öffnungen (14,15,16,17,18,19) durch die Platten nach außen erstreckt.

16. Brennstoffzellenstapel nach Anspruch 15, **dadurch gekennzeichnet, dass** die geschlossene Schleife so geformt ist, dass das ankommende Brenngas über die Anode geleitet ist.

17. Brennstoffzellenstapel nach Anspruch 15 oder Anspruch 16, **dadurch gekennzeichnet, dass** die Verteilrohre (7,8) für ankommendes und abgeführtes sauerstoffhaltiges Gas durch die Peripherie der Platten (10,30), die Dichtungseinheiten (20,21,42) und ein Gehäuse (4) definiert sind, in dem der Stapel (3) angeordnet ist.

## Revendications

1. Empilement de piles à combustible comprenant en alternance des plaques de pile à combustible à oxyde solide (10) et des plaques de séparateur de gaz (30) empilées face à face avec un ou plusieurs ensembles formant joint (20, 21, 34, 36, 37, 38, 40, 42) disposés entre des surfaces généralement planes opposées (33, 54) de chaque paire adjacente desdites plaques de pile à combustible et plaques de séparateur de gaz, chacun desdits ensembles formant joint comprenant une paire de nervures rigides (20, 21, 36, 37) faisant saillie de l'une desdites surfaces (33) avec une vallée (22, 38) définie entre elles, une troisième nervure rigide (34, 42) faisant saillie de l'autre desdites surfaces et emboîtée entre ladite paire de nervures, et un mastic de verre (40) le long de la vallée qui vient en contact avec la surface de la vallée (22, 38) et la troisième nervure (34, 42), **caractérisé en ce que** chaque nervure (20, 21, 34, 36, 37, 38, 40, 42) comporte des parois latérales (52, 58) et s'effile en s'éloignant de la plaque respective, lesdites parois latérales formant des surfaces de contact opposées qui coopèrent pour définir l'insertion maximale de la troisième nervure (34, 42) dans la vallée (22, 38), ladite troisième nervure (34, 42) ayant un profile qui laisse un vide pour le mastic de verre entre la vallée (22, 38) et la troisième nervure (34, 42) à ladite insertion maximale.

2. Empilement de piles à combustible selon la revendication 1, **caractérisé en ce que** chaque nervure (20, 21, 34, 36, 37, 42) comporte deux parois latérales inclinées (52, 58).

3. Empilement de piles à combustible selon la revendication 1 ou la revendication 2, **caractérisé en ce qu'**au moins l'une de la paire de nervures (20, 21, 36, 37) comporte une surface distale (51, 61) qui vient également en contact avec la plaque opposée à ladite insertion maximale.

4. Empilement de piles à combustible selon l'une quelconque des revendications 1 à 3, **caractérisé en ce qu'**il s'agit d'un empilement colonnaire (3) et **en ce que** ladite une desdites surfaces (33, 54) est en regard vers le haut.

5. Empilement de piles à combustible selon l'une quelconque des revendications 1 à 4, **caractérisé en ce que** le mastic de verre (40) a une plage de composition de 0 à 2 % en poids de Li₂O, 0 à 18 % en poids de Na₂O, 2 à 25 % en poids de K₂O, 0 à 4 % en poids de MgO, 0 à 15 % en poids de CaO, 0 à 10 % en poids de SrO, 0 à 30 % en poids de BaO, 0 à 25 % en poids de B₂O₃, 0 à 10 % en poids de Al₂O₃, 30 à 75 % en poids de SiO₂ et 0 à 10 % en poids de ZrO₂.

6. Empilement de piles à combustible selon la revendication 5, **caractérisé en ce que** le mastic de verre (40) a une plage de composition de 0 à 0,7 % en poids de Li₂O, 0 à 1,2 % en poids de Na₂O, 5 à 15 % en poids de K₂O, 0 à 2 % en poids de MgO, 2 à 12 % en poids de CaO, 0 à 2 % en poids de SrO, 2 à 10 % en poids de BaO, 2 à 10 % en poids de B₂O₃, 2 à 7 % en poids de Al₂O₃, 50 à 70 % en poids de SiO₂ et 0 à 2 % en poids de ZrO₂.

7. Empilement de piles à combustible selon l'une quelconque des revendications 1 à 6, **caractérisé en ce que** le mastic de verre (40) est totalement fondu, mais visqueux à une température dans la plage de températures de service de l'empilement d'environ 700 à environ 1 100°C.

8. Empilement de piles à combustible selon la revendication 7, **caractérisé en ce que** le mastic de verre (40) est totalement fondu, mais visqueux à toute température dans la plage de 700 à 900°C.

9. Empilement de piles à combustible selon l'une quelconque des revendications 1 à 8, **caractérisé en ce que** toutes les plaques (10, 30) sont en céramique et les nervures (20, 21, 34, 36, 37, 42) sont formées par sérigraphie d'une boue du matériau de nervure dans un liant sur les surfaces respectives, et séchage et cuisson de la structure résultante.

10. Empilement de piles à combustible selon l'une quelconque des revendications 1 à 9, **caractérisé en ce que** toutes les plaques (10, 30) sont en céramique et les nervures (20, 21, 34, 36, 37, 42) sont formées respectivement du même matériau.

11. Empilement de piles à combustible selon la revendication 10, **caractérisé en ce que** les plaques de séparateur de gaz (30) sont formées de zircone contenant jusqu'à 20 % en poids d'alumine.

12. Empilement de piles à combustible selon la revendication 10 ou la revendication 11, **caractérisé en ce que** les nervures (20, 21, 34) sur les plaques de pile à combustible (10) sont formées sur l'électrolyte et l'électrolyte est en zircone stabilisée par oxyde d'yttrium.

13. Empilement de piles à combustible selon l'une quelconque des revendications 1 à 12, **caractérisé en ce que** l'empilement de piles à combustible (3) est collecté de façon interne (5, 6) pour le gaz combustible entrant et le gaz combustible sortant, et chaque ouverture (14, 15, 16, 17, 18, 19) à travers les plaques de pile à combustible et de séparateur de gaz (10, 30) pour ledit gaz combustible entrant et le gaz combustible sortant est entourée par un ensemble respectif parmi les ensembles formant joint (34, 36, 37, 38, 40) d'un côté cathode de chaque paire de plaques de pile à combustible et de séparateur de gaz adjacentes.

14. Empilement de piles à combustible selon la revendication 13, **caractérisé en ce qu'**il existe deux collecteurs de gaz combustible sortant (6) et les ensembles formant joint (34, 36, 37, 38, 40) autour des ouvertures (16, 17, 18, 19) destinés à cet effet comportent chacun un bras (35, 39) s'étendant en éloignement de l'ouverture respective vers, mais espacé du collecteur de gaz combustible entrant (5) et le long de la cathode pour guider un gaz contenant de l'oxygène par-dessus la cathode.

15. Empilement de piles à combustible selon la revendication 13 ou la revendication 14, **caractérisé en ce que** l'empilement de piles à combustible (3) est collecté de façon externe (7, 8) pour un gaz contenant de l'oxygène entrant et sortant et un seul desdits ensembles formant joint (42) s'étend dans une boucle fermée d'un côté anode de chaque paire de plaques de pile à combustible et de séparateur de gaz adjacentes (10, 30) vers l'extérieur desdites ouvertures (14, 15, 16, 17, 18, 19) à travers les plaques.

16. Empilement de piles à combustible selon la revendication 15, **caractérisé en ce que** la boucle fermée est mise en forme pour diriger le gaz combustible entrant par-dessus l'anode.

17. Empilement de piles à combustible selon la revendication 15 ou la revendication 16, **caractérisé en ce que** les collecteurs de gaz contenant de l'oxygène entrant et sortant (7, 8) sont définis par la périphérie des plaques (10, 30), des ensembles formant joint (20, 21, 42) et d'un logement (4) dans lequel l'empilement (3) est disposé.
